Europäisches Patentamt

European Patent Office

Office européen des brevets

(19)

(11) Numéro de publication : **0 079 996 B1**

(12) **FASCICULE DE BREVET EUROPÉEN**

(45) Date de publication du fascicule du brevet :
28.08.85

(51) Int. Cl.⁴ : **C 12 G 1/08**

(21) Numéro de dépôt : **81401840.4**

(22) Date de dépôt : **20.11.81**

(54) **Procédé pour la fabrication de boissons alcooliques et cuve pour la mise en œuvre de ce procédé.**

(43) Date de publication de la demande :
01.06.83 Bulletin 83/22

(45) Mention de la délivrance du brevet :
28.08.85 Bulletin 85/35

(84) Etats contractants désignés :
DE FR GB IT

(56) Documents cités :
DE-C- 609 240
FR-A- 828 463
FR-A- 1 594 987
FR-A- 2 388 581
FR-A- 2 483 945

(73) Titulaire : **Charmat, Robert**
**12, Rue des Marronniers**
**F-75016 Paris (FR)**

(72) Inventeur : **Charmat, Robert**
**12, Rue des Marronniers**
**F-75016 Paris (FR)**

(74) Mandataire : **Boutin, Antoine et al**
**CABINET PIERRE LOYER 18, rue de Mogador**
**F-75009 Paris (FR)**

Jouve, 18, rue St-Denis, 75001 Paris, France

## Description

La présente invention concerne un nouveau procédé pour la fabrication de boissons alcooliques.

Bien qu'il soit d'une application particulièrement avantageuse pour la fabrication de vins mousseux, il est également applicable à la fabrication de toutes boissons devant être soumises à une fermentation et une décantation tels que les vins, qu'ils soient tranquilles ou non, les cidres, etc.

L'une des opérations critiques des procédés de fabrication des boissons fermentées est la séparation des résidus de fermentation. Pour ce faire, on utilise actuellement plusieurs méthodes qui sont toutes spécifiques des types de boissons auxquels elles sont appliquées.

Le soutirage consiste à transvaser d'une cuve à l'autre la partie claire de liquide, l'opération étant répétée en ce qui concerne les vins fins, jusqu'à élimination complète des lies. Il peut être effectué à l'air (vins jeunes) ou à l'abri de l'air (vins vieux).

Le filtrage s'effectue au cours du transvasement entre la cuve de fermentation et la cuve de stockage. Il nécessite des installations complexes et coûteuses, tant à l'achat qu'en maintenant et il soumet le vin à un traitement violent qui nuit à sa qualité.

En ce qui concerne plus particulièrement les vins mousseux, on utilise actuellement deux méthodes :

La première est la méthode traditionnelle dite « champenoise ». La prise de mousse s'effectue en bouteille. Il faut, pour éliminer les levures et les résidus de fermentation, procéder au remuage et au dégorgement des bouteilles. Pour faciliter ce dégorgement, on trempe le goulot des bouteilles dans une saumure réfrigérante pour emprisonner les dépôts accumulés sur le bouchon dans un bloc de glace plus facile à expulser.

La méthode champenoise est peu et difficilement mécanisable, elle nécessite l'emploi d'un personnel spécialisé et des surfaces d'installation importantes. Elle est de ce fait réservée pour la fabrication de vins chers et de haute qualité.

La seconde méthode est appelée fermentation en cuve close. La prise de mousse s'effectue dans une cuve close de grande capacité, puis le vin est transvasé pour sa mise en bouteille dans une cuve de soutirage après avoir été filtré.

Afin de maintenir pendant tout le traitement un équilibre constant de la pression, toute l'installation, y compris l'installation de filtrage, doit être isobarométrique.

Cette seconde méthode, en raison des inconvénients dus à la filtration, est jusqu'à présent réservée à la fabrication industrielle de vins mousseux de qualité ordinaire.

La présente invention a pour but de permettre la fabrication en cuve close de boissons alcooliques de qualité équivalente aux boissons obtenues par les méthodes dites naturelles.

Selon l'invention, le vin est mis à fermenter en cuve close et après fermentation, pendant la décantation, le liquide est réfrigéré à partir du haut, sans que sa température puisse atteindre son point de congélation, tandis que, lorsque la décantation est achevée, on congèle le pied de cuve, c'est-à-dire la partie inférieure du liquide dans laquelle se trouvent tous les dépôts accumulés (levures, résidus de fermentation, lies, bitartrate de potasse cristallisé, etc.). On peut ainsi soutirer le vin sans filtration et sans risquer de le troubler par la remise en suspension des dépôts.

Dans le cas particulier des vins mousseux ou de boissons fermentées pétillantes, telles que les cidres, cette congélation s'effectue après la prise de mousse. Elle permet d'éviter les opérations de remuage et de dégorgement de la méthode champenoise.

L'invention concerne également une cuve close pour la mise en œuvre du procédé ci-dessus, caractérisée en ce qu'elle comporte, à sa partie supérieure, un dispositif de réfrigération et, à sa partie inférieure, un dispositif de congélation.

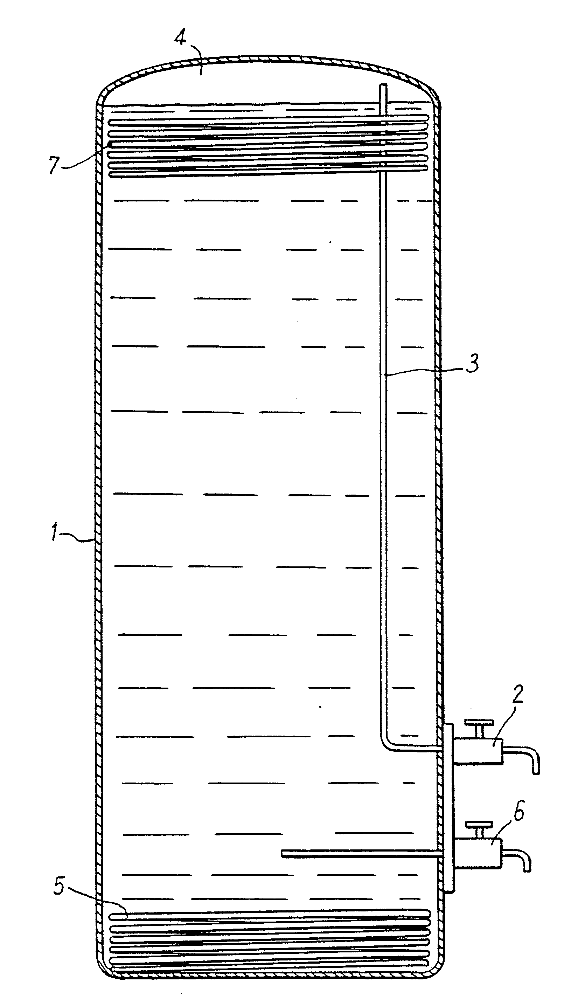

D'autres caractéristiques et avantages de l'invention ressortiront de la description qui va suivre illustrée par le dessin unique annexé, qui représente schématiquement une cuve munie, en partie haute, de moyens de réfrigération et en partie basse, de moyens de congélation.

La cuve 1, représentée sur le dessin, est une cuve close de type connu. Elle comporte des moyens de remplissage et une jauge de niveau non représentés. Elle comporte, en outre, un dispositif de contrôle de la fermentation, constitué par une vanne 2, reliée à un compresseur de gaz carbonique, non représenté, et à une cannule 3, disposée à l'intérieur de la cuve, dont l'extrémité libre aboutit dans l'espace libre réservé lors du remplissage au sommet de la cuve.

En partie haute de la cuve 1, est disposé un serpentin réfrigérant 7, relié à un compresseur muni d'un thermostat, non représenté.

Au bas de la cuve 1, est placé un deuxième serpentin réfrigérant 5, relié à des moyens de commande et un compresseur non représentés. De préférence, ce dispositif réfrigérant 5 est de capacité suffisante pour congeler environ 5 % du liquide contenu dans la cuve. La partie congelée occupera donc approximativement le 1/20 de la hauteur de la cuve.

Légèrement au-dessus du niveau maximal de congélation, est placé un dispositif de soutirage 6 qui, dans le cas de fabrication de vins mousseux, est un dispositif de soutirage isobarométrique de type connu.

Le procédé selon l'invention est mis en œuvre, à l'aide de la cuve décrite ci-dessus, de la manière suivante :

Dans le cas des vins tranquilles, la cuve est remplie de manière à laisser un espace libre pour le contrôle et l'équilibrage de la pression interne de la cuve au cours de la fermentation, au moyen de la vanne 2.

Eventuellement, le vin peut être sucré.

Au cours de la fermentation, les résidus de fermentation décantent et s'accumulent au fond de la cuve. Pour accélérer la décantation, on utilise les propriétés de propagation du froid vers le bas. A cet effet, lorsque la fermentation est achevée, on refroidit le liquide contenu dans la cuve à partir du haut au moyen du serpentin 7 et de son compresseur.

La propagation du froid accélère la décantation des résidus de fermentation et provoquera la cristallisation du bitartrate de potasse, qu'il est particulièrement souhaitable d'éliminer, dans les vins blancs notamment.

Lorsque la décantation est achevée, on met en marche le dispositif de congélation 5, jusqu'à solidification de la partie inférieure de la cuve (pied de cuve) qui contient les dépôts. La partie non congelée peut alors être soutirée sans filtration, puisque les résidus emprisonnés dans la glace ne peuvent être remis en suspension dans la cuve.

On évite ainsi les traitements violents, qui sont responsables de la mauvaise qualité des vins produits jusqu'à présent en cuve close.

Lorsque la cuve est vide, il suffit de réchauffer la partie congelée et de la soutirer pour nettoyer la cuve.

Dans le cas des boissons pétillantes, notamment des vins mousseux, on ajoute, au moment du remplissage de la cuve, des levures qui provoquent la prise de mousse au cours de la fermentation. Il est souhaitable de conserver ces levures, qui restent actives et peuvent être réutilisées pour des cuvées suivantes.

L'invention procure l'avantage de pouvoir immédiatement réutiliser le pied de cuve contenant les levures qui seront libérées, lors du remplissage de la cuve, par la fonte de la partie congelée.

La réfrigération par le haut sera contrôlée, de telle sorte que le liquide n'atteindra pas son point de congélation.

De manière avantageuse, on peut utiliser un compresseur unique pour le serpentin de congélation et celui de réfrigération.

## Revendications

1. Procédé pour la fabrication en cuve close de boissons alcooliques, caractérisé en ce que, pendant la décantation, le liquide est réfrigéré, à partir du haut, sans que la température puisse atteindre son point de congélation, tandis que lorsque la décantation est terminée, la partie inférieure du liquide est congelée pour emprisonner le dépôt, la partie supérieure non congelée pouvant alors être soutirée sans filtration.

2. Procédé selon la revendication 1, caractérisé en ce que la réfrigération du liquide est stoppée avant que ne commence la congélation de la partie inférieure de celui-ci.

3. Procédé selon la revendication 1 ou 2, caractérisé en ce que, dans le cas de la fabrication de vins mousseux ou autres boissons alcooliques pétillantes, la congélation est effectuée après la prise de mousse.

4. Procédé selon l'une quelconque des revendications 1 à 3, caractérisé en ce que l'on congèle environ 5 % du contenu de la cuve.

5. Cuve close pour la mise en œuvre du procédé selon l'une quelconque des revendications 1 à 4, caractérisée en ce qu'elle comporte, à sa partie haute, un dispositif de réfrigération et, à sa partie basse, un dispositif de congélation.

6. Cuve close selon la revendication 5, caractérisée en ce que le dispositif de congélation (5) comporte un serpentin réfrigérant d'une capacité suffisante pour congeler 5 % du contenu de ladite cuve (1).

7. Cuve close selon la revendication 5 ou 6, caractérisée en ce que le dispositif de réfrigération (7) est constitué par un serpentin associé à un compresseur situé hors de la cuve et muni d'un thermostat, un dispositif de soutirage (6) étant disposé au-dessus du niveau maximal de congélation.

8. Cuve close selon l'une quelconque des revendications 5 à 7, caractérisée en ce que le dispositif de réfrigération (7) est monté de manière amovible à la partie supérieure de la cuve.

## Claims

1. A process for making alcoholic beverages in closed vats, characterized in that during the decantation the liquid is refrigerated from the top without the temperature being able to reach its freezing point, whereas when the decantation is completed, the lower part of the liquid is frozen to emprison the deposits, the unfrozen upper part being then able to be drawn off without filtration.

2. A process according to claim 1, characterized in that the refrigeration of the liquid is stopped before the freezing of its lower part is begun.

3. A process according claim 1 or 2, characterized in that, in the case of the manufacture of sparkling wines or other effervescent alcoholic beverages, the freezing takes place after the foam-build up.

4. A process in accordance with any of claims 1 to 3, characterized in that about 5 % of the content of the vat is frozen.

5. A closed vat for achieving the process according any of the claim 1 to 4, characterized in that it is fitted with a refrigeration device in its upper part and a freezing device in its lower part.

6. A closed vat according to claim 5, characterized in that the freezing device (5) has a cooling coil of a capacity sufficient to freeze 5 % of the contents of the said vat (1).

7. A closed vat according to claim 5 or 6, characterized in that the refrigeration device is formed of a coil associated with a compressor outside the vat and fitted with a thermostat, a draw-off device (6) being placed above the maximum freezing level.

8. A closed vat according to any of the claims 5 to 7 characterized in that the refrigeration device (7) is mounted in a movable manner on the upper part of the vat.

**Patentansprüche**

1. Verfahren zur Herstellung von alkoholischen Getränken in geschlossenen Bottichen, dadurch gekennzeichnet, daß die Flüssigkeit während der Klärung von oben her gekühlt wird, ohne daß die Temperatur auf deren Gefrierpunkt absinken kann, und daß nach Abschluß der Klärung der untere Teil der Flüssigkeit eingefroren wird, um das Depot einzuschließen, während der obere, ungefrorene Teil ohne Filterung abgezogen werden kann.

2. Verfahren nach Anspruch 1, dadurch gekennzeichnet, daß die Kühlung der Flüssigkeit gestoppt wird, bevor das Einfrieren von deren unterem Teil beginnt.

3. Verfahren nach Anspruch 1 oder 2, dadurch gekennzeichnet, daß bei der Herstellung von Schaumweinen und anderen perlenden alkoholischen Getränken das Einfrieren nach der Schaumbildung erfolgt.

4. Verfahren gemäß Anspruch 1-3, dadurch gekennzeichnet, daß rund 5 % des Bottichinhalts eingefroren werden.

5. Geschlossener Bottich zur Durchführung des Verfahrens nach Anspruch 1-4, dadurch gekennzeichnet, daß er am oberen Teil eine Kühlvorrichtung und am unteren Teil eine Gefriervorrichtung umfaßt.

6. Geschlossener Bottich nach Anspruch 5, dadurch gekennzeichnet, daß die Gefriervorrichtung (5) eine Kühlschlange umfaßt, deren kapazität ausreicht, um 5 % des Bottich (1) inhalts einzufrieren.

7. Geschlossener Bottich nach Anspruch 5 oder 6, dadurch gekennzeichnet, daß die Kühlvorrichtung (7) aus einer Kühlschlange besteht, die mit einem außerhalb des Bottichs gelegenen Kompressor verbunden und mit einem Thermostat ausgestattet ist, während eine Abziehvorrichtung (6) oberhalb des maximalen Gefrierpegels angebracht ist.

8. Geschlossener Bottich nach Anspruch 5-7, dadurch gekennzeichnet, daß die Gefriervorrichtung (7) abnehmbar am oberen Teil des Bottichs montiert ist.